# EUROPEAN PATENT SPECIFICATION

(11) **EP 2 796 318 B1**
(45) Date of publication and mention of the grant of the patent: **03.05.2017**
(21) Application number: 14162063.3
(22) Date of filing: 27.03.2014
(51) Int. Cl.: B60Q 1/00, B60Q 1/26, B62J 6/04, F21S 8/10

(54) **Tail light device for a vehicle**
Heckleuchtenvorrichtung für ein Fahrzeug
Dispositif de feu arrière pour véhicule

(30) Priority: 24.04.2013 JP 2013091639
(43) Date of publication of application: 29.10.2014
(73) Proprietor: Honda Motor Co., Ltd., Tokyo 107-8556 (JP)
(72) Inventor: Ohashi, Hayato, Wako-shi, Saitama 351-0193 (JP); Soeta, Ryuhei, Wako-shi, Saitama 351-0193 (JP); Momma, Eikichi, Wako-shi, Saitama 351-0193 (JP)
(74) Representative: Stevens, Jason Paul

(56) References cited:
- EP-A1- 1 762 775
- EP-A2- 2 394 891
- DE-A1-102007 033 711
- DE-A1-102009 006 184
- DE-A1-102010 043 921
- JP-A- H11 321 447
- US-A1- 2003 227 781
- US-A1- 2006 256 572
- US-A1- 2008 259 629

## Description

The present invention relates to a tail light device for a vehicle in which a stop lamp, winkers (indicators) and a tail lamp are arranged in a common housing.

A tail light device of this type is known from Japanese Patent Laid-open Publication No. 2007-203828. This document discloses a way to make the tail light device smaller. However, the stop lamp, the winkers and the tail lamp all have separate reflectors, so that there is a relatively large number of component parts.

The present invention has been made in consideration of the above circumstances, and it is an object of at least the preferred embodiments of the invention to provide a tail light device for a vehicle that contains fewer component parts and can be made smaller.

EP 2394891 A2 and US 2008/0259629 A1 disclose a tail lamp unit for a motorcycle, comprising a reflection member having three reflection sections, two partition sections and three container spaces for housing lamp bulbs.

According to a first aspect of the present invention, there is provided a tail light device for a vehicle in which a first lamp, second lamps and a third lamp are arranged in a common housing, comprising: a first lamp reflector with an inner surface for reflecting light from a light source for the first lamp, wherein the first lamp reflector extends in a lateral direction, and a second lamp reflector with an inner surface for reflecting light from a light source for each of the second lamps, light sources for the third lamp located between the first lamp reflector and the second lamp reflector, and third lamp reflection surfaces for reflecting light from the light sources for the third lamp, formed on outer surfaces of the first lamp reflector and the second lamp reflector; characterized in that the first lamp reflector and the second reflector are attached to the housing separately from each other; the first lamp is a stop lamp, the second lamps are winkers, the third lamp is a tail lamp, the first lamp reflector is a stop lamp reflector, the second lamp reflector is a winker reflector and the third lamp reflection surfaces are tail lamp reflection surfaces; each of the stop lamp reflector and the winker reflector has, along the optical axis in the rearward direction, concave surface portions and flat surface portions; the flat surface portions of the stop lamp reflector and the winker reflector extend parallel to the optical axis; the flat surface portions of the stop lamp reflector and the winker reflector are parallel to each other; and the light sources for the tail lamp are arranged forwardly of: a boundary facing the light sources for the tail lamp, the boundary being one of the boundaries between the concave surface portions and the flat surface portions of the stop lamp reflector; and a boundary facing the light sources for the tail lamp, the boundary being one of the boundaries between the concave surface portions and the flat surface portions of the winker reflector; wherein the light sources for the tail lamp are located: in front of the stop lamp reflector; and in front of the boundary between the concave surface portions and the flat surface portion of the winker reflector.

Since the tail lamp reflection surfaces for reflecting the light from the light source for the tail lamp are formed on outer surfaces of the stop lamp reflector and the winker reflector, a separate reflector for the tail lamp is not necessary, and so the number of component parts can be reduced and the tail light device can be made smaller in size.

Preferably, at least a portion of each of the outer surfaces of the stop lamp reflector and the winker reflector which face the light source for the tail lamp is formed in a flat shape extending in parallel with an optical axis of the light source for the tail lamp.

With this arrangement, since the outer surfaces of the stop lamp reflector and the winker reflector have a portion which faces the light source for the tail lamp and which is formed in a flat shape extending in parallel with the optical axis of the light source for the tail lamp, the tail lamp reflection surface also extends in parallel with the optical axis of the light source for the tail lamp, and so the light from the light source for the tail lamp can be more easily irradiated rearwardly.

In a further preferred form, the stop lamp reflector is arranged near to the light source for the stop lamp and the winker reflector is arranged near to the light source for each of the winkers, wherein the concave surface portions of the stop lamp reflector and the winker reflector are configured to reflect rearwardly the light from the light source and the flat surface portions of the stop lamp reflector and the winker reflector are a pair of lateral wall portions extending rearwardly in a direction of light radiation direction from the concave surface portions.

With this construction, the light source for the tail lamp is arranged in a comparatively large space around the concave surface portions, so that the degree of freedom with respect to the arrangement of the light source for the tail lamp can be increased.

Preferably, the tail light device further comprises an inner lens for the tail lamp formed of frosted glass or similar and arranged behind the light source for the tail lamp.

With this arrangement, the tail lamp, in cooperation with the reflecting light from the flat tail lamp reflection surfaces formed on outer surfaces of the stop lamp reflector and the winker reflector, can easily cause surface light emission.

A preferred embodiment of the invention will now be described by way of example only and with reference to the accompanying drawings, in which:
FIG. 1 is a side view of a motorcycle;
FIG. 2 is a partially cutaway rear view of a tail light device taken along arrow 2 in FIG. 1;
FIG. 3 is a cross-sectional view taken along line 3-3 in FIG. 2;
FIG. 4 is a rear view showing a right half of the tail light device in the condition where an outer lens, a stop lamp reflector, a winker reflector and an inner lens have been taken off;
FIG. 5 is a cross-sectional view taken along line 5-5 in FIG. 2; and
FIG. 6 is a cross-sectional view taken along line 6-6 in FIG. 2.

A preferred embodiment of the present invention will be explained with reference to the drawings.

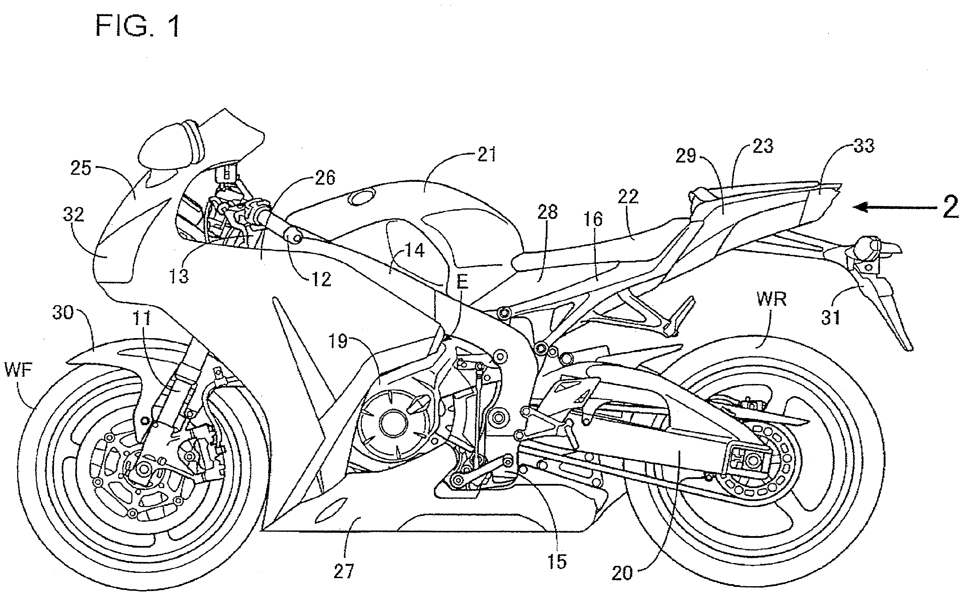

Referring first to FIG. 1, a vehicle body frame F of a motorcycle (as an example of a straddle-type vehicle) includes a pair of front forks 11 rotatably carrying a front wheel WF, a head pipe 13 rotatably supporting a steering handlebar 12 which is connected to the front forks 11, a pair of left and right main frames 14 extending downwardly and rearwardly from the head pipe 13, a pair of left and right pivot frames 15 integrally connected with rear portions of the main frames 14 and extending downwardly therefrom, and a pair of left and right seat rails 16 extending upwardly and rearwardly from the rear portions of the main frames 14.

On the vehicle body frame F, there is carried an engine body 19 of a water-cooled internal combustion engine E which is arranged under the main frames 14. In addition, a front end of a swing arm 20 is pivotally mounted to the pivot frames 15 in a vertically swingable fashion. A rear wheel WR which is driven by motive power of the internal combustion engine E is rotatably carried on a rear end of the swing arm 20.

A fuel tank 21 is mounted on the main frames 14 above the internal combustion engine E. A front riding seat 22 located behind fuel tank 21 and a rear riding seat 23 (pillion seat) located behind the front riding seat 22 are supported by the seat rails 16.

A front cowling 25 is located above the front wheel WF and is supported by the vehicle body frame F. The head pipe 13, which is located at a front end portion of the vehicle body frame F, is covered by the front cowling 25 from the front. A pair of left and right centre cowlings 26 for covering the front portion of the vehicle body frame F and a portion of the internal combustion engine E from each side are connected to left and right sides of the front cowling 25. A pair of left and right lower cowlings 27 which cover a lower part of the internal combustion engine E from the sides and from beneath and which are joined to each other are connected continuously to rear lower portions of the centre cowlings 26, respectively. In addition, a pair of left and right side covers 28 for covering a rear lower part of the fuel tank 21 from each side is arranged between the fuel tank 21 and the front riding seat 22. A part of each of the seat rails 16 located below the rear riding seat 23 is covered with a rear cowling 29.

Further, the front forks 11 support a front fender 30 for covering at least a portion of the front wheel WF from above, while on the rear of the seat rails 16 there is supported a rear fender 31 for covering the rear wheel WR from above and behind.

A headlight device 32 is arranged in a front central position of the front cowling 25, while a tail light device 33 in accordance with the present invention is arranged in a laterally central position of a rear end of the rear cowling 29.

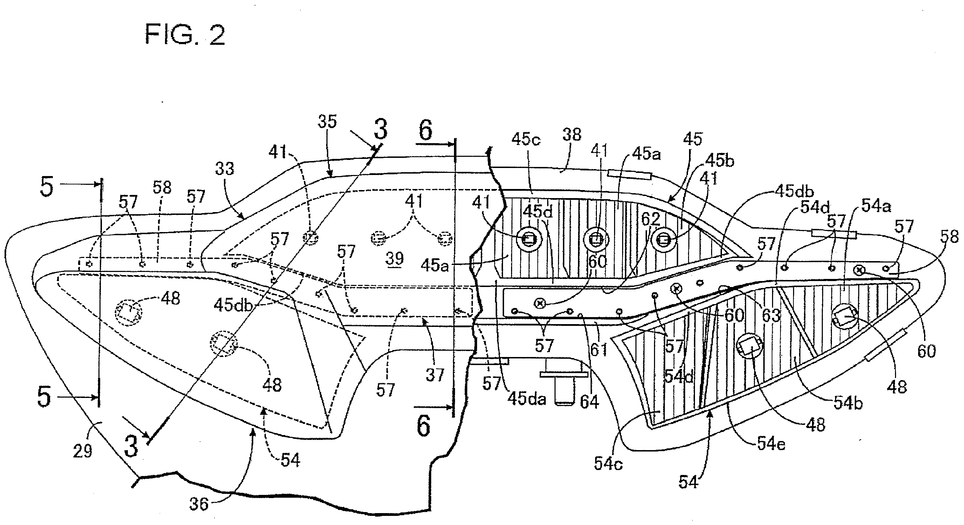

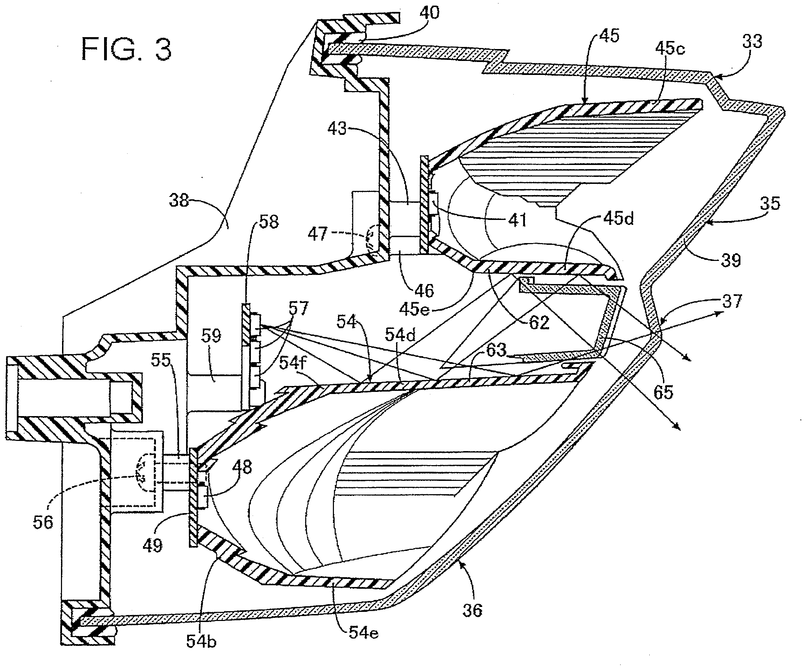

Referring now to FIGS. 2 and 3, the tail light device 33 has a common housing 38 of synthetic resin in which are arranged a stop lamp 35, a pair of left and right winkers (indicators) 36, 36 and a tail lamp 37. The housing 38 is supported on the rear ends of the seat rails 16, and a colourless transparent outer lens 39 which is used in common for the stop lamp 35, the winkers 36, 36 and the tail lamp 37 is attached to the housing through a seal member 40.

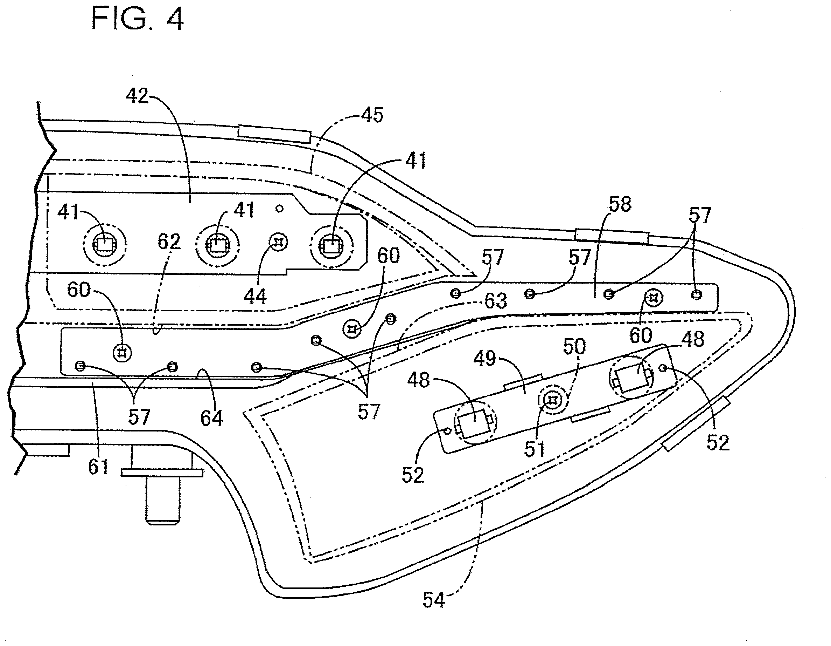

Referring now also to FIG. 4, within the outer lens 39, a plurality of (for example, six) light sources 41 for the stop lamp 35 are laterally arranged at equally spaced intervals and are covered by the outer lens 39. In this embodiment, each of the light sources 41 for the stop lamp 35 is an LED, which is mounted on a first substrate 42 which is laterally elongate and extends in the lateral direction of the vehicle. This first substrate 42 is fastened by screw members 44 to a plurality of first boss portions 43 provided on the housing 38.

The stop lamp 35 is composed of the outer lens 39, the six light sources 41 for the stop lamp 35, and a stop lamp reflector 45, an inner surface of which reflects light from the light sources 41 for the stop lamp 35. The stop lamp reflector 45 is configured to extend laterally in a central upper position of the housing 38. A plurality of first fitting projections 46 which are integrally provided on the stop lamp reflector 45 are fastened to the housing 38 with screw means 47 respectively.

The stop lamp reflector 45 is formed of four concave surface portions 45a which are arranged laterally side by side, two concave surface portions 45b which are arranged laterally outwardly of the concave surface portions 45a, and upper (first) and lower (second) lateral wall portions 45c, 45d which extend rearwardly (in the direction of light radiation) from the concave surface portions 45a, 45b. The plurality of concave surface portions 45a, 45b correspond individually to the six light sources 41 for the stop lamp 35 and are arranged in the vicinity of each of the corresponding light sources 41, such that each one reflects rearwardly the light from one of the light sources 41 for the stop lamp 35. The concave surface portions 45a, 45b are formed, for example, in a paraboloidal or ellipsoidal shape, with the light sources 41 for the stop lamp 35 located at the focus, or in the shape of a multi-reflector which has a plurality of reflecting surfaces facing a plurality of different directions and which approximates to the paraboloid and the ellipsoid.

The lateral end portions of the first and second lateral wall portions 45c, 45d are inclined in such a manner as to gradually approach each other as they go laterally outwardly. Further, the concave surface portions 45b located at the lateral ends gradually become smaller in the vertical direction (when viewed from the rear) as they go laterally outwardly.

The winkers 36 are arranged so that one is below the left side of the stop lamp 35, and the other is below the right side of the stop lamp 35. Each winker has a pair of light sources 48, which are covered by the outer lens 39 and are arranged side by side and laterally spaced from each other. In this embodiment, each light source 48 for the winkers 36 is an LED. The light sources 48 for the winkers 36 are arranged in pairs on each of two second substrates 49 which are separately arranged at the left and right of the tail light device. One second boss portion 50 for each of the second substrates 49 is provided in the housing 38, and a substantially central portion of the second substrate 49 is fastened to the second boss portion 50 by a screw member 51. Positioning pins 52, 52 provided in the housing 38 are inserted into both end lateral portions of each second substrate 49.

Each winker 36 is composed of the outer lens 39, the two light sources 48, 48 for the winker 36, and a winker reflector 54, an inner surface of which reflects light from the light sources 48, 48 for the winkers 36. The winker reflectors 54 for the pair of left and right winkers 36 are arranged beneath and spaced apart from the left and right sides of the stop lamp reflector 45, respectively. In addition, a plurality of second fitting projections 55 provided integrally with each winker reflector 54 are fastened to the housing 38 by screw members 56.

The winker reflector 54 includes three concave surface portions 54a, 54b, 54c which are located in the vicinity of the two light sources 48, 48 for the winker 36 and arranged laterally side by side, and a pair of upper (third) and lower (fourth) lateral wall portions 54d, 54e which extend rearwardly (in the direction of light radiation) from the concave surface portions 54a, 54b. The light sources 48, 48 for the winker 36 are arranged in the central concave surface portion 54b and the laterally outer end concave surface portion 54a, among the three concave surface portions 54a, 54b, 54c arranged laterally side by side.

The concave surface portions 54a, 54b correspond individually to the light sources 48, 48 for the winker 36 and are arranged in the vicinity of these corresponding light sources 48, 48 such that each one reflects rearwardly the light from one of the light sources 48, 48 for the winker 36. The concave surface portions 54a, 54b are formed, for example, in a paraboloidal or ellipsoidal shape, with the light sources 48 for the winker 36 located at the focus, or in the shape of a multi-reflector which has a plurality of reflecting surfaces facing a plurality of different directions and which approximates to the paraboloid and the ellipsoid. The concave surface portion 54c located at the laterally inner end position does not reflect the light from a light source 48 but is formed in a shape to correspond to the concave surface portions 54a, 54b.

The lateral end portions of the third and fourth lateral wall portions 54d, 54e are formed in such a manner as to gradually approach each other as they go laterally outwardly. Of the three concave surface portions 54a, 54b, 54c, the concave surface portion 54a located at the laterally outer end position gradually become smaller in the vertical direction (when viewed from the rear) as it goes laterally outwardly.

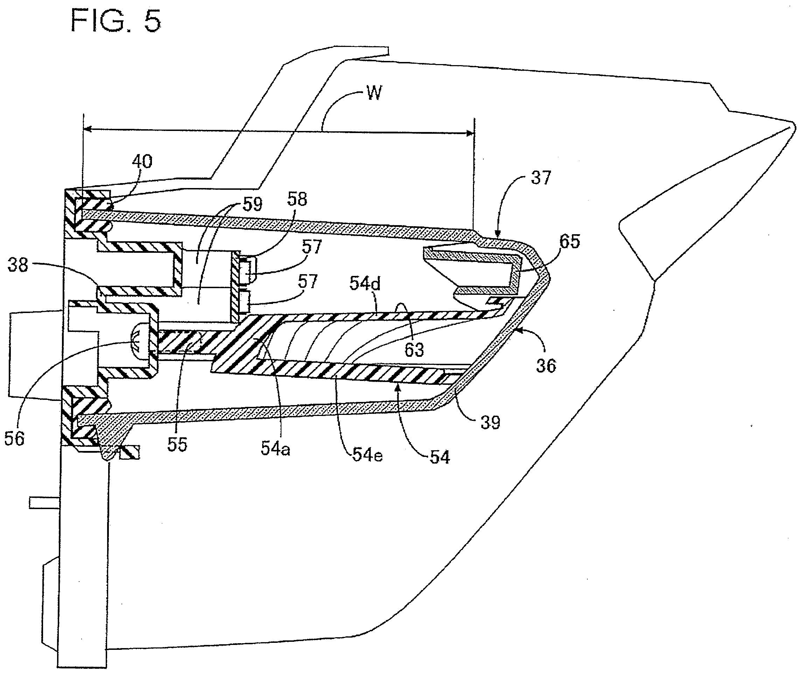

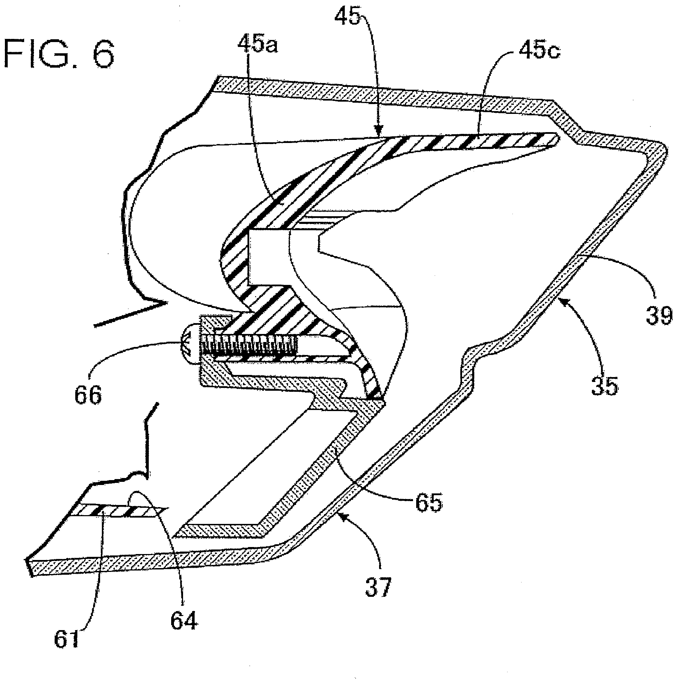

Referring now also to FIGS. 5 and 6, located between the stop lamp reflector 45 and the pair of left and right winker reflectors 54, 54 and arranged at spaced intervals below the left and right sides of the stop lamp reflector 45 are a plurality of (for example, eighteen) light sources 57 for the tail lamp 37, which are arranged side by side at laterally spaced intervals. In this embodiment, each of the light sources 57 for the tail lamp 37 is an LED.

The light sources 57 for the tail lamp 37 are arranged forwardly of a boundary 45e facing the light sources 57 for the tail lamp 37, which is one of the boundaries between the concave surface portions 45a, 45b of the stop lamp reflector 45 and the pair of first and second lateral wall portions 45c, 45d thereof. The light sources 57 for the tail lamp 37 are also arranged forwardly of a boundary 54f facing the light sources 57 for the tail lamp 37, which is one of the boundaries between the concave surface portions 54a, 54b, 54c of the winker reflector 54 and the pair of third and fourth lateral wall portions 54d, 54e thereof. In this embodiment, the light sources 57 for the tail lamp 37 are located in front of the stop lamp reflector 45 and also in front of the boundary 54f between the concave surface portions 54a, 54b, 54c of the winker reflector 54 and the third lateral wall portion 54d thereof.

Third substrates 58 which are laterally elongated are arranged between the left and right sides of the stop lamp reflector 45 and the pair of left and right winker reflectors 54. The third substrates 58 are formed as a left and right pair, and nine light sources 57 for the tail lamp are provided on each of the third substrates 58. In addition, three places located at laterally spaced intervals along each of the third substrates 58 are fastened to third bosses 59 through screw members 60.

A lower wall portion of the stop lamp reflector 45 (specifically, the second lateral wall portion 45d) is formed with a generally horizontal portion 45da which is located laterally centrally and extends generally horizontally, and inclined portions 45db, 45db which are connected continuously to the lateral ends of the generally horizontal portion 45da and which are inclined gradually upwardly as they go laterally outwardly. Further, each of the upper lateral wall portions of the winker reflectors 54, 54 (specifically, the third lateral wall portion 54d) is formed with an inclined portion 54da, which is inclined in parallel with the inclined portion 45db of the second lateral wall portion 45d, and a generally horizontal portion 54db which extends laterally and generally horizontally from the laterally outer end of the inclined portion 54da.

Further, the housing 38 has a lateral wall portion 61 which projects and extends generally horizontally below and facing the generally horizontal portion 45da of the second lateral wall portion 45d of the stop lamp reflector 45. When viewed from the rear, the third substrate 58 is located below the generally horizontal portion 45da and the inclined portion 45db of the second lateral wall portion 45d and above the wall portion 61 and the inclined portion 54da of the third lateral wall portion 54d, in such a manner as to be vertically sandwiched therebetween.

Moreover, tail lamp reflecting surfaces 62, 63 for reflecting the light from the light sources 57 for the tail lamp 37 are formed on outer surfaces of the stop lamp reflector 45 and the winker reflector 54. In this embodiment, the tail lamp reflecting surface 62 is formed on an outer surface of the second lateral wall portion 45d of the stop lamp reflector 45, while the tail lamp reflecting surface 63 is formed on an outer surface of the third lateral wall portion 54d of the winker reflector 54. In addition, a tail lamp reflecting surface 64 is also formed on an upper surface of the wall portion 61.

Further, portions of the outer surfaces of the stop lamp reflector 45 and the winker reflector 54 which face at least the light sources 57 for the tail lamp 37 (namely, the second lateral wall portion 45d and the third lateral wall portion 54d in this embodiment) are formed in the shape of a flat plate extending in parallel with the optical axes of the light sources 57 for the tail lamp 37.

The tail lamp 37 has an inner lens 65 for the tail lamp 37, which is located behind the light sources 57 for the tail lamp 37. This inner lens 65 for the tail lamp 37 is made of frosted glass or a similar material, and has a substantially U-shaped cross-section which is open forwardly. The inner lens 65 for the tail lamp 37 is fastened to the stop lamp reflector 45 by a plurality of screw members 66. In addition, the inner lens 65 for the tail lamp 37 is coloured red.

Since no reflector is arranged above the third substrate 58 in a position located laterally outwardly of the stop lamp reflector 45, each outer surface of the left and right end portions of the outer lens 39 is coated with paint to prevent the penetration of light, in such a manner that the light from the light sources 57 for the tail lamp 37 provided in the third substrate 58 in a position located laterally outwardly of the stop lamp reflector 45 is prevented from coming out upwardly. In addition, an area to be coated with paint is designated by W in FIG. 5, and no paint is coated on an area located above the inner lens 65 for the tail lamp 37 in the outer surfaces on both left and right end portions of the outer lens 39, in order to increase light distribution to the rear upper part.

Next, the operation of this embodiment will be explained.

The stop lamp reflector 45 for reflecting the light from the light sources 41 for the stop lamp 35 from its inner surface, and the pair of left and right winker reflectors 54 for reflecting the light from the light sources 48 for the winkers 36 from their inner surfaces, are attached to the housing 38 separately from each other. The light sources 57 for the tail lamp 37 are located between the stop lamp reflector 45 and the winker reflectors 54. The tail lamp reflection surfaces 62, 63 for reflecting the light from the light sources 57 for the tail lamp 37 are formed on the outer surfaces of the stop lamp reflector 45 and the winker reflectors 54. With the above construction, a separate reflector for the tail lamp 37 is not necessary, and so the number of component parts can be reduced and the tail light device 33 can be made smaller in size.

Further, at least portions of the outer surfaces of the stop lamp reflector 45 and the winker reflector 54 which face the light sources 57 for the tail lamp 37 (namely, the second lateral wall portion 45d of the stop lamp reflector 45 and the third lateral wall portion 54d of the winker reflector 54) are formed in a flat shape extending in parallel with the optical axes of the light sources 57 for the tail lamp 37. Accordingly, the tail lamp reflection surfaces 62, 63 also extend in parallel with the optical axes of the light sources 57 for the tail lamp 37, so that the light from the light sources 57 for the tail lamp 37 can be more easily irradiated rearwardly.

Further, the stop lamp reflector 45 has concave surface portions 45a, 45b which are arranged corresponding to the light sources 41 for the stop lamp 35, upper and lower lateral wall portions 45c, 45d which extend rearwardly (in the direction of light radiation) from the concave surface portions 45a, 45b. The winker reflector 54 has concave surface portions 54a, 54b, 54c which are arranged corresponding to the light sources 48 for the winkers 36, and upper and lower lateral wall portions 54d, 54e which extend rearwardly (in the direction of light radiation) from the concave surface portions 54a, 54b, 54c. The light sources 57 for the tail lamp 37 are located forwardly of boundaries 45e, 54f facing the light sources 57 of the tail lamp 37, each of which is one of the boundaries between the concave surface portions 45a, 45b; 54a, 54b, 54c and the lateral wall portions 45c, 45d; 54d, 54e. Specifically, the light sources 57 for the tail lamp 37 are located forwardly of the boundary 45e of the stop lamp reflector 45 and forwardly of the boundary 54f of the winker reflector 54 in this embodiment. With the above construction, the light sources 57 for the tail lamp 37 are arranged in a comparatively large space around the perimeter of the concave surface portions 54a, 54b, 54c, so that it is possible to increase the degree of freedom with respect to the arrangement of the light sources 57 for the tail lamp 37.

Furthermore, since the inner lens 65 for the tail lamp 37 is made of frosted glass or similar and is arranged behind the light sources 57 for the tail lamp 37, the tail lamp 37, in cooperation with the reflecting light from the flat tail lamp reflection surfaces 62, 63 formed on the outer surfaces of the stop lamp reflector 45 and the winker reflector 54, can easily cause surface light emission.

A preferred embodiment of the present invention has been described. However, the present invention is not limited to the above described embodiment, and various changes and modifications may be made without departing from the scope of the present invention as defined in the claims.

## Claims

1. A tail light device for a vehicle in which a first lamp (35), second lamps (36) and a third lamp (37) are arranged in a common housing (38), comprising:
a first lamp reflector (45) with an inner surface for reflecting light from a light source (41) for the first lamp (35), wherein the first lamp reflector extends in a lateral direction, and
a second lamp reflector (54) with an inner surface for reflecting light from a light source (48) for each of the second lamps (36),
light sources (57) for the third lamp (37) located between the first lamp reflector (45) and the second lamp reflector (54), and
third lamp reflection surfaces (62, 63) for reflecting light from the light sources (57) for the third lamp (37), formed on outer surfaces of the first lamp reflector (45) and the second lamp reflector (54);
**characterized in that**
the first lamp reflector (45) and the second reflector (54) are attached to the housing (38) separately from each other;
the first lamp (35) is a stop lamp, the second lamps (36) are winkers, the third lamp (37) is a tail lamp, the first lamp reflector (45) is a stop lamp reflector, the second lamp reflector (54) is a winker reflector and the third lamp reflection surfaces (62, 63) are tail lamp reflection surfaces;
each of the stop lamp reflector and the winker reflector has, along the optical axis in the rearward direction, concave surface portions (45a, 45b; 54a, 54b, 54c) and flat surface portions (45c, 45d; 54d, 54e);
the flat surface portions of the stop lamp reflector and the winker reflector extend parallel to the optical axis;
the flat surface portions of the stop lamp reflector and the winker reflector are parallel to each other; and
the light sources (57) for the tail lamp (37) are arranged forwardly of:
a boundary (45e) facing the light sources (57) for the tail lamp (37), the boundary being one of the boundaries between the concave surface portions (45a, 45b) and the flat surface portions (45c, 45d) of the stop lamp reflector (45); and
a boundary (54f) facing the light sources (57) for the tail lamp (37), the boundary being one of the boundaries between the concave surface portions (54a, 54b, 54c) and the flat surface portions (54d, 54e) of the winker reflector (54);
wherein the light sources (57) for the tail lamp (37) are located:
in front of the stop lamp reflector (45); and
in front of the boundary (54f) between the concave surface portions (54a, 54b, 54c) and the flat surface portion (54d) of the winker reflector (54).

2. A tail light device for a vehicle according to claim 1, wherein at least a portion of each of the outer surfaces of the stop lamp reflector (45) and the winker reflector (54) which face the light source (57) for the tail lamp (37) is formed in a flat shape extending in parallel with an optical axis of the light source (57) for the tail lamp (37).

3. A tail light device for a vehicle according to claim 2, wherein the stop lamp reflector (45) is arranged near to the light source (41) for the stop lamp (35) and the winker reflector (54) is arranged near to the light source (48) for each of the winkers, wherein the concave surface portions (45a, 45b; 54a, 54b, 54c) of the stop lamp reflector (45) and the winker reflector (54) are configured to reflect rearwardly the light from the light source (41, 48) and the flat surface portions of the stop lamp reflector (45) and the winker reflector (54) are a pair of lateral wall portions (45c, 45d; 54d, 54e) extending rearwardly in a direction of light radiation direction from the concave surface portions (45a, 45b; 54a, 54b, 54c).

4. A tail light device for a vehicle according to claim 2 or 3, further comprising an inner lens (65) for the tail lamp (37) being made of frosted glass or similar and arranged behind the light source (57) for the tail lamp (37).

## Patentansprüche

1. Heckleuchtenvorrichtung für ein Fahrzeug, in der eine erste Leuchte (35), zweite Leuchten (36) und eine dritte Leuchte (37) in einem gemeinsamen Gehäuse (38) angeordnet sind, wobei die Heckleuchtenvorrichtung umfasst:
einen ersten Leuchtenreflektor (45) mit einer inneren Oberfläche, um Licht von einer Lichtquelle (41) für die erste Leuchte (35) zu reflektieren, wobei sich der erste Leuchtenreflektor in eine seitliche Richtung erstreckt, und
einen zweiten Leuchtenreflektor (54) mit einer inneren Oberfläche, um Licht von einer Lichtquelle (48) für jede der zweiten Leuchten (36) zu reflektieren,
Lichtquellen (57) für die dritte Leuchte (37), die zwischen dem ersten Leuchtenreflektor (45) und dem zweiten Leuchtenreflektor (54) angeordnet sind, und
Reflexionsoberflächen (62, 63) der dritten Leuchte, um Licht von den Lichtquellen (57) für die dritte Leuchte (37) zu reflektieren, wobei die Reflexionsoberflächen auf den äußeren Oberflächen des ersten Leuchtenreflektors (45) und des zweiten Leuchtenreflektors (54) gebildet sind;
**dadurch gekennzeichnet, dass**
der erste Leuchtenreflektor (45) und der zweite Leuchtenreflektor (54) an dem Gehäuse (38) getrennt voneinander befestigt sind;
die erste Leuchte (35) eine Bremsleuchte ist, die zweiten Leuchten (36) Blinker sind, die dritte Leuchte (37) eine Heckleuchte ist, der erste Leuchtenreflektor (45) ein Bremsleuchtenreflektor ist, der zweite Leuchtenreflektor (54) ein Blinkerreflektor ist und die Reflexionsoberflächen (62, 63) der dritten Leuchte Reflexionsoberflächen der Heckleuchte sind;
jeder Bremsleuchtenreflektor und Blinkerreflektor entlang der optischen Achse in der rückwärtigen Richtung konkave Oberflächenabschnitte (45a, 45b; 54a, 54b, 54c) und flache Oberflächenabschnitte (45c, 45d; 54d, 54e) aufweist;
sich die flachen Oberflächenabschnitte des Bremsleuchtenreflektors und des Blinkerreflektors parallel zu der optischen Achse erstrecken;
die flachen Oberflächenabschnitte des Bremsleuchtenreflektors und des Blinkerreflektors zueinander parallel sind; und
die Lichtquellen (57) für die Heckleuchte (37) vorne angeordnet sind von:
einer Grenze (45e), die den Lichtquellen (57) der Heckleuchte (37) zugewandt ist, wobei die Grenze eine der Grenzen zwischen den konkaven Oberflächenabschnitten (45a, 45b) und den flachen Oberflächenabschnitten (45c, 45d) des Bremsleuchtenreflektors (45) ist;
und
einer Grenze (54f), die den Lichtquellen (57) der Heckleuchte (37) zugewandt ist, wobei die Grenze eine der Grenzen zwischen den konkaven Oberflächenabschnitten (54a, 54b, 54c) und den flachen Oberflächenabschnitten (54d, 54e) des Blinkerreflektors (54) ist;
wobei die Lichtquellen (57) für die Heckleuchte (37) angeordnet sind:
vor dem Bremsleuchtenreflektor (45); und
vor der Grenze (54f) zwischen den konkaven Oberflächenabschnitten (54a, 54b, 54c) und dem flachen Oberflächenabschnitt (54d) des Blinkerreflektors (54).

2. Heckleuchtenvorrichtung für ein Fahrzeug nach Anspruch 1, wobei mindestens ein Abschnitt von jeder der äußeren Oberflächen des Bremsleuchtenreflektors (45) und des Blinkerreflektors (54), die den Lichtquellen (57) der Heckleuchte (37) zugewandt sind, in einer flachen Form gebildet ist, die sich zu einer optischen Achse der Lichtquelle (57) für die Heckleuchte (37) parallel erstreckt.

3. Heckleuchtenvorrichtung für ein Fahrzeug nach Anspruch 2, wobei der Bremsleuchtenreflektor (45) in der Nähe der Lichtquelle (41) für die Bremsleuchte (35) angeordnet ist, und wobei der Blinkerreflektor (54) in der Nähe der Lichtquelle (48) für jeden Blinker angeordnet ist, wobei die konkaven Oberflächenabschnitte (45a, 45b; 54a, 54b, 54c) des Bremsleuchtenreflektors (45) und des Blinkerreflektors (54) konfiguriert sind, um das Licht von der Lichtquelle (41, 48) nach hinten zu reflektieren, und wobei die flachen Oberflächenabschnitte des Bremsleuchtenreflektors (45) und des Blinkerreflektors (54) ein Paar seitlicher Wandabschnitte (45c, 45d; 54d, 54e) bilden, die sich nach hinten in einer Richtung einer Lichtstrahlrichtung von den konkaven Oberflächenabschnitten (45a, 45b; 54a, 54b, 54c) erstrecken.

4. Heckleuchtenvorrichtung für ein Fahrzeug nach Anspruch 2 oder 3, die ferner eine innere Linse (65) für die Heckleuchte (37) umfasst, die aus Mattglas oder einem ähnlichen Glas hergestellt ist und hinter der Lichtquelle (57) für die Heckleuchte (37) angeordnet ist.

## Revendications

1. Dispositif de feu arrière pour un véhicule, dans lequel une première lampe (35), des deuxièmes lampes (36) et une troisième lampe (37) sont agencées dans un boîtier commun (38), comprenant :
un premier réflecteur de lampe (45) avec une surface interne pour réfléchir la lumière d'une source lumineuse (41) pour la première lampe (35), dans lequel le premier réflecteur de lampe s'étend dans une direction latérale, et
un second réflecteur de lampe (54) avec une surface interne pour réfléchir la lumière d'une source lumineuse (48) pour chacune des deuxièmes lampes (36),
des sources lumineuses (57) pour la troisième lampe (37) situées entre le premier réflecteur de lampe (45) et le second réflecteur de lampe (54) et
des troisièmes surfaces de réflexion de lampe (62, 63) pour réfléchir la lumière des sources lumineuses (57) pour la troisième lampe (37), formées sur des surfaces externes du premier réflecteur de lampe (45) et du second réflecteur de lampe (54) ;
**caractérisé en ce que** :
le premier réflecteur de lampe (45) et le second réflecteur (54) sont fixés au boîtier (38) séparément l'un de l'autre ;
la première lampe (35) est un feu de stop, les deuxièmes lampes (36) sont des clignotants, la troisième lampe (37) est un feu arrière, le premier réflecteur de lampe (45) est un réflecteur de feu de stop, le deuxième réflecteur de lampe (54) est un réflecteur de clignotant et les troisièmes surfaces de réflexion de lampe (62, 63) sont des surfaces de réflexion de feu arrière ;
chacun du réflecteur de feu de stop et du réflecteur de clignotant a, le long de l'axe optique, dans la direction arrière, des parties de surface concaves (45a, 45b ; 54a, 54b, 54c) et des parties de surface plates (45c, 45d ; 54d, 54e) ;
les parties de surface plates du réflecteur de feu de stop et du réflecteur de clignotant s'étendent parallèlement à l'axe optique ;
les parties de surface plates du réflecteur de feu de stop et du réflecteur de clignotant sont parallèles l'une à l'autre ; et
les sources lumineuses (57) pour le feu arrière (37) sont agencées en avant :
d'une limite (45e) en regard des sources lumineuses (57) pour le feu arrière (37), la limite étant l'une des limites entre les parties de surface concaves (45a, 45b) et les parties de surface plates (45c, 45d) du réflecteur de feu de stop (45) ; et
d'une limite (54f) en regard des sources lumineuses (57) pour le feu arrière (37), la limite étant l'une des limites entre les parties de surface concaves (54a, 54b, 54c) et les parties de surface plates (54d, 54e) du réflecteur de clignotant (54) ;
dans lequel les sources lumineuses (57) pour le feu arrière (37) sont situées :
devant le réflecteur de feu de stop (45) ; et
devant la limite (54f) entre les parties de surface concaves (54a, 54b, 54c) et la partie de surface plate (54d) du réflecteur de clignotant (54).

2. Dispositif de feu arrière pour un véhicule selon la revendication 1, dans lequel au moins une partie de chacune des surfaces externes du réflecteur de feu de stop (45) et du réflecteur de clignotant (54) qui font face à la source lumineuse (57) pour le feu arrière (37) est formée à plat de manière à s'étendre parallèlement à l'axe optique de la source lumineuse (57) pour le feu arrière (37).

3. Dispositif de feu arrière pour un véhicule selon la revendication 2, dans lequel le réflecteur de feu de stop (45) est agencé près de la source lumineuse (41) pour le feu de stop (35) et le réflecteur de clignotant (54) est agencé près de la source lumineuse (48) pour chacun des clignotants, dans lequel les parties de surface concaves (45a, 45b ; 54a, 54b, 54c) du réflecteur de feu de stop (45) et du réflecteur de clignotant (54) sont configurés pour réfléchir vers l'arrière la lumière provenant de la source lumineuse (41, 48) et les parties de surface plates du réflecteur de feu de stop (45) et du réflecteur de clignotant (54) sont une paire de parties de paroi latérales (45c, 45d, 54d, 54e) s'étendant vers l'arrière dans une direction du rayonnement lumineux depuis les parties de surface concaves (45a, 45b ; 54a, 54b, 54c).

4. Dispositif de feu arrière pour un véhicule selon la revendication 2 ou 3, comprenant en outre une lentille interne (65) pour le feu arrière (37) qui est constituée de verre dépoli ou similaire et agencée derrière la source lumineuse (57) pour le feu arrière (37).
